# EUROPÄISCHE PATENTANMELDUNG

(11) **EP 2 063 193 A1**
(43) Veröffentlichungstag der Anmeldung: **27.05.2009**
(21) Anmeldenummer: 08169516.5
(22) Anmeldetag: 20.11.2008
(51) Int. Cl.: F24F 5/00, F24F 12/00

(54) **Verfahren zum klimatisieren eines Gebäudes**

(30) Priorität: 20.11.2007 AT 18782007
(71) Anmelder: VKR Holding A/S, 2970 Hørsholm (DK)
(72) Erfinder: Engelhart, Klaus, 3508 Höbenbach (AT)
(74) Vertreter: Babeluk, Michael

(57) **Zusammenfassung**

Die vorliegende Erfindung betrifft ein Verfahren zum Klimatisieren eines Gebäudes (100), bei dem Luft durch einen Hybridkollektor (1) geführt wird, in dem ein Wärmeträgerfluid einerseits durch Solarstrahlung erwärmt werden kann und andererseits mit Luft in thermische Wechselwirkung gebracht wird, die den Hybridkollektor (1) durchströmt, wobei das erwärmte Wärmeträgerfluid zur Beheizung oder zur Warmwasserbereitung verwendet wird. Eine Energieeinsparung wird dadurch erreicht, dass zumindest in einem ersten Betriebsmodus Abluft aus dem Gebäude (100) durch den Hybridkollektor (1) geführt wird.

## Beschreibung

Die vorliegende Erfindung betrifft ein Verfahren gemäß dem Oberbegriff von Patentanspruch 1.

Unter Kimatisierung wird hier das Heizen, Lüften und Kühlen verstanden, wobei es bei der vorliegenden Erfindung primär um den Bereich der Niedrigenergiehäuser oder Passivhäuser geht.

Unter anderem aus den Schriften DE 103 00 427 A1, DE 101 18 572 A1, DE 101 02 041 A1 und DE 100 08 404 A1 ist bekannt, dass es vorteilhaft ist, Solarstrahlung-Wärmeträgerfluid-Wärmetauscher also solche Kollektoren, welche von der Sonne kommende Strahlungsenergie in Wärme eines durch den Kollektor geleiteten Wärmeträgerfluids umwandeln, mit Wärmetauschern zu kombinieren, welche auch die Wärme von Umgebungsluft in das Wärmeträgerfluid übertragen. Im folgenden wird eine derartige Kombinationen aus Sonnenkollektor und Umgebungsluft-Wärmeträgerfluid-Wärmetauschern als "Hybridkollektor" bezeichnet. Weiters ist es unter anderem aus den genannten Schriften bekannt, dass es vorteilhaft ist, wenn das durch einen Hybridkollektor erwärmte Wärmeträgerfluid nicht nur zum direkten Beheizen eines Pufferspeichers oder eines Gebäudes verwendet wird, sondern wahlweise auch zum indirekten Beheizen derselben über eine Wärmepumpe. Durch die Wärmepumpe werden auch niedrige Vorlauftemperaturen des Wärmeträgerfluids nutzbar. In der DE 103 00 427 A1 und der DE 100 08 404 A1 wird überdies noch vorgeschlagen, den oben erwähnten Hybridkollektor zusätzlich noch mit Fotovoltaikzellen auszustatten, sodass aus ankommender Strahlungsenergie auch elektrische Energie gewonnen werden kann.

Wesentliches Ziel dieser Bemühungen ist es, den Wirkungsgrad der Heizanlagen als Koeffizient der gesamten, zur Nutzung abgegebenen Energie durch die dafür aus dem Stromnetz bezogene elektrische Energie möglichst hoch zu halten. Nur wenn dieses Wirkungsgrad, kurz "COP" für "Coefficient Of Performance" genannt, über 3 liegt, bedeutet das Heizsystem eine echte Primärenergieeinsparung, da für den Gesamtwirkungsgrad des Stromversorgungsnetzes - "vom Brennstoff bis zur Steckdose" - etwa 0,33 anzusetzen ist.

Die DE 103 00 427 A1 beschreibt fortschrittliche Kombinationen aus Hybridkollektor, Wärmepumpe, Pufferspeicher, Latentwärmespeicher sowie zusätzlichem Luft-Sole und Abwasser-Sole-Wärmetauscher. Der Fluss in zwei Kreisen von Wärmeträgerfluiden ist je nach nutzbarer Wärmequelle und gerade vorliegendem Wärmebedarf in verschiedenen Zweigen zwischen den genannten Elementen steuerbar einstellbar. Mit dem System entsprechend der DE 103 00 427 A1 ist nach dortigen Angaben eine Primärenergieeinsparung von über 50% erreichbar, was einem COP von mehr als 6 entspricht. Am System entsprechend der DE 103 00 427 A1 ist kritisch anzumerken, dass es in der Herstellung sehr aufwändig ist, da die zum Erreichen des guten COP erforderlichen Einzelmaßnahmen teilweise sehr kostenintensive Einzelteile und auch bei gleichzeitiger Verwirklichung mit den anderen Maßnahmen einen hohen zusätzlichen Installationsaufwand am Gebäude bedingen. Ein nachträglicher Einbau eines derartigen Systems in ein schon bestehendes, ursprünglich nicht dafür ausgelegtes Gebäude kann sich daher bei derzeitigem Preis- und Zinsgefüge wirtschaftlich nicht rechnen.

Die der Erfindung zu Grunde liegende Aufgabe besteht darin, unter Anwendung von Solarenergie und Umgebungswärme ein Heiz-, Lüftungs- und Kühlsystem für ein Gebäude bereitzustellen, welches bei vergleichbaren Anschaffungs- bzw. Installationskosten gegenüber dem System entsprechend der DE 103 00 427 A1 einen besseren COP und mehr Komfort bietet.

Erfindungsgemäß werden diese Aufgaben durch ein Verfahren gemäß Patentanspruch 1 gelöst. Dabei wird wie bei der DE 103 00 427 A1 von einem Hybridkollektor ausgegangen, welcher eine Absorberfläche aufweist die mit einem durch den Hybridkollektor durchfließenden Wärmeträgerfluid in wärmeleitender Verbindung steht, wobei die gewonnene Wärme durch das Wärmeträgerfluid unter optionaler Einbindung einer Wärmepumpe je nach gegebenem Temperaturniveau und aktuell vorliegendem Bedarf unterschiedlichen Verbrauchern zugeführt wird.

Erfindungsgemäß wird eine kontrollierte Wohnraumlüftung vorgesehen und in die Anlage vorteilhaft miteingebunden. Der Hybridkollektor erzeugt durch die Auftriebswirkung der in ihm erhitzten Luft eine Kaminwirkung die als zusätzlicher oder alleiniger Antrieb für die erzwungene Strömung des kontrollierten Abluftstromes aus dem Gebäude dient. Abluftstrom und Zuluftstrom werden durch jeweils einen Kanal eines Gegenstromwärmetauschers geführt, wodurch ein Wärmeaustausch zwischen diesen beiden erfolgt. Bei Kühlbedarf kann der Abluftstrom aus dem Gebäude vor dem Eintritt in den Gegenstromwärmetauscher durch Besprühen mit Wasser befeuchtet und damit gekühlt werden, womit in weiterer Folge eine Kühlung des Zuluftstromes in das Gebäude bewirkt wird. Bei Heizbedarf kann auch der Zuluftstrom von dem im System zirkulierenden Wärmeträgerfluid über eine Wärmetauscherfläche erwärmt werden. Diese Erwärmung kann bei relativ niedrigem Temperaturniveau des Wärmeträgerfluids erfolgen, womit eine gute energieoptimale Ausnutzung des Hybridkollektors auch bei tiefen Außentemperaturen ermöglicht wird.

Durch die Einbindung der Wohnraumlüftung sowie der Kühlung und der direkten Erwärmung des Zuluftstromes in das System kann gegenüber dem System der DE 103 00 427 A1 ein Komfortgewinn und eine Verbesserung der Energieausbeute erreicht werden. Damit kann bei gleich gutem oder besserem COP auf einen relativ teuren Latentwärmespeicher verzichtet werden.

Wie bei allen Anlagen dieser Gattung können auch hier weitere Wärmequellen wie z.B. die Wärme aus Abwasser oder in Erde gespeicherte Wärme miteingebunden werden.

Durch den Einsatz eines Sprühbefeuchters wird insbesondere auf einfache und energiesparende Weise eine Kühlung des Gebäudes ermöglicht.

Weiters betrifft die vorliegende Erfindung eine Anlage gemäß Patentanspruch 6. Eine solche Anlage erlaubt es, den Gesamtenergiebedarf eines Gebäudes bei hohem Benutzungskomfort merklich abzusenken.

Details und optionale vorteilhafte Ausführungsformen von erfindungsgemäßen Anlagen werden anhand der Zeichnungen erklärt.
- Fig. 1: zeigt ein Fließschema einer erfindungsgemäßen Anlage.
Luftströme sind in strichlierten bzw. strichpunktierten Linien dargestellt.
In dünnen durchgehenden Linien sind Flüsse des Wärmeträgerfluids dargestellt.
In starken durchgehenden Linien sind Geräte symbolisiert.
- Fig. 2: zeigt in perspektivischer Ansicht mit Blickrichtung auf die Rückseite des Hybridkollektors eine vorteilhafte Anordnung der einzelnen Geräte einer erfindungsgemäßen Anlage in einem gemeinsamen Gehäuse. Aus Gründen der Anschaulichkeit ist das Gehäuse dabei auch an den der Einstrahlung abgewandten Seiten als durchsichtig dargestellt.
- Fig. 3: zeigt in perspektivischer Ansicht beispielhaft die Anordnung zweier erfindungsgemäßer Anlagen an der Sonnenseite (Südseite) eines Gebäudes.

Die Funktionsweise wird im folgenden an Hand der Vorgänge bei einzelnen Betriebszuständen veranschaulicht.

### a) Adiabate Kühlung mit solarer Ventilation:

Die Raum-Abluft 11 eines Gebäudes 100 wird vom Abluftanschluss 102 über einen Sprühbefeuchter 4 geleitet und besprüht. Durch die Verdunstung des Sprühwassers sinkt die Temperatur der Abluft um etwa 10°C. Sie wird weiter in den Gegenstromwärmetauscher 3 geleitet. In diesem wird die Abluft auf das Temperaturniveau der von der anderen Seite her, von außen einströmenden Zuluft 12 gebracht, wodurch diese gekühlt über den Zuluftanschluss 101 in den Innenraum eintritt. Nach dem Gegenstromwärmetauscher 3 wird die Abluft über eine entsprechend eingestellte Klappe 9, erforderlichenfalls unterstützt durch ein Gebläse 6 in den Hybridkollektor 1 geleitet, wo sie an den als Wärmeübertragungsflächen und Strömungsleitflächen wirkenden Rippen der Absorberfläche erhitzt wird, aufsteigt, und den Hybridkollektor durch die geöffnete obere Klappe nach außen verlässt. Je nach Stärke dieses solaren Kamineffektes wird mehr oder weniger elektrische Energie an dem die Abluft antreibenden Gebläse 6 eingespart. Bei geschlossenen Fenstern und Türen des Gebäudes und entsprechend starkem solaren Kamineffekt ist auch für die Bewegung des Zuluftstromes kein elektrischer Antrieb erforderlich.

### b) Solare Ventilation:

Die solare Ventilation erfolgt gleich wie die zuvor beschriebene adiabate Kühlung mit dem einen Unterschied, dass die Abluft 11 durch den Sprühbefeuchter 4 nur durchgeleitet und nicht besprüht wird. Die Abluft wird durch den Kamineffekt im Hybridkollektor nach außen gesogen. Nur bei ungenügender solarer Einstrahlung bzw. in der Nacht übernimmt ein Gebläse 6 den Antrieb. Bei genügend solarem Überschuss im Puffer 5 kann die Absorberfläche im Hybridkollektor auch durch Wärme aus dem Puffer beheizt werden und somit die Ventilation auch ohne Sonneneinstrahlung aufrecht erhalten werden. Dazu wird Wärmeträgerfluid bei entsprechend eingestellten Ventilen 8 und erforderlichenfalls unterstützt durch die Pumpe 7 über den Puffer 5 und die Rohrschlangen an der Absorberfläche des Hybridkollektors 1 im Kreis geführt.

### c) Wärmepumpenbetrieb:

Die Zu- und Abluft strömt wie bei der eben beschriebenen solaren Ventilation, wobei das Gebläse 6 für diese Ventilation sorgt. Falls der Wärmebedarf der Wärmepumpe beispielsweise in den Nachtstunden durch die Abluft nicht mehr gedeckt werden kann, wird durch ein weiteres Gebläse 6a Außenluft 13 durch den Hybridkollektor 1 geführt, um diesem die zusätzlich benötigte Wärmemenge zuführen zu können. Die Wärmepumpe 2 entnimmt nun dem Hybridkollektor 1 die Wärme und führt diese auf einem höheren Temperaturniveau dem Puffer 5 oder einem anderen gewünschten Verbraucher zu. Alternativ zu dem Gebläse 6a kann die zusätzliche Luftmenge in Form von Umgebungsluft durch eine stromaufwärts des Gebläses 6 Klappe 6b zugeführt und der Abluft beigemischt werden, so dass mit dem Gebläse 6 das Auslangen gefunden werden kann.

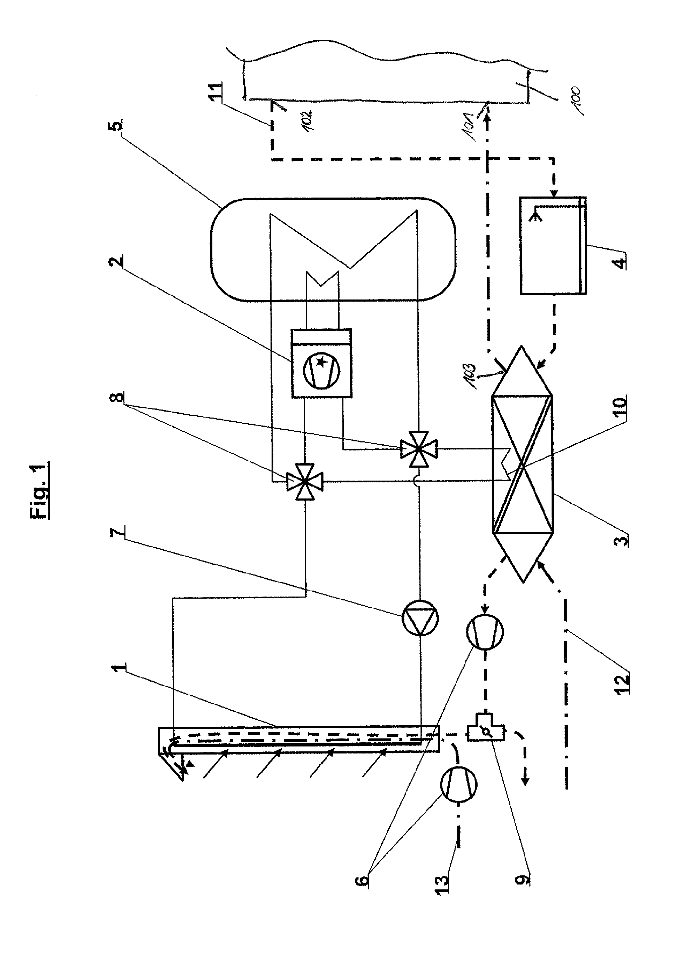

Neben der Wärme der Außenluft wird auch die Restwärme der Abluft und die diffuse und direkte Sonnenstrahlung (in Fig. 1 durch Pfeile auf den Hybridkollektor dargestellt) genutzt und dadurch der COP der Anlage erhöht.

### d) Puffer laden / Luftheizung:

Auf Grund einer der entsprechend eingestellten Klappe 9 wird der Abluftstrom nicht durch den Hybridkollektor 1 sondern direkt nach außen geführt. Es wird auch keine Außenluft durch den Hybridkollektor geführt. Die Klappen, welche das Gehäuseinnere des Hybridkollektors mit der Außenluft verbinden können, sind geschlossen. Der Hybridkollektor 1 arbeitet nun wie ein konventioneller Flachkollektor, in welchem Strahlungsenergie eine Erhöhung der Temperatur einer wärmeleitenden Absorberfläche bewirkt und damit in weiterer Folge ein in Rohren daran geführtes Wärmeträgerfluid erwärmt wird. Der hinter der Absorberfläche gelegene Luftraum, also jener, welcher der Einstrahlungsseite der Absorberfläche gegenüber liegt, übernimmt dabei die Funktion der Wärmeisolierung. Die Pumpe 7 zirkuliert das Wärmeträgerfluid durch die Rohre des Absorbers, wodurch dieses die solare Wärme aufnimmt. Ist der Puffer geladen und besteht ein Bedarf an Raumheizung so wird das Wärmeträgerfluid durch die Ventile 8 über den Wärmetauscher 10 geleitet, welcher im Gegenstromwärmetauscher 3 für den Abluft-Zuluft-Wärmetausch integriert ist. Damit wird direkt zu einer Erhöhung der Temperatur der Zuluft 12 beigetragen.

So kann der Hybridkollektor 1 auch sehr gut im unterem Temperaturniveau genutzt werden. Dieser Anwendungsfall tritt insbesondere im Frühjahr und Herbst auf. Dabei kann der geringe Heizenergiebedarf über dieses System tagsüber bereitgestellt werden. Damit der gewünschte hohe COP erreicht werden kann, müssen natürlich alle Komponenten der Anlage möglichst optimal bemessen sein. Vor allem die Auslegung des Hybridkollektor 1 unterscheidet sich dabei von gewohnten Ausführungen:

Damit der Hybridkollektor 1 als Solarkamin eine starke Wirkung haben kann, muss er hoch sein, sollte eher steil stehen und sollte auch ausreichend tief sein, damit der Strömungsquerschnitt der im Kaminbetrieb durchströmenden Luft nicht zu flach ist. Der erfindungsgemäß angewandte Hybridkollektor 1 ist daher im Normalfall vielfach höher als breit, weist eine größere Stärke als gewohnte, auf Dächern angeordnete Kollektoren auf und steht im Normalfall auch steiler als gewohnte auf Dächern angeordnete Solarkollektoren. Ein erfindungsgemäßer Hybridkollektor 1 kann bezüglich äußerem Erscheinungsbild wie ein üblicher Fassadenkollektor gestaltet sein.

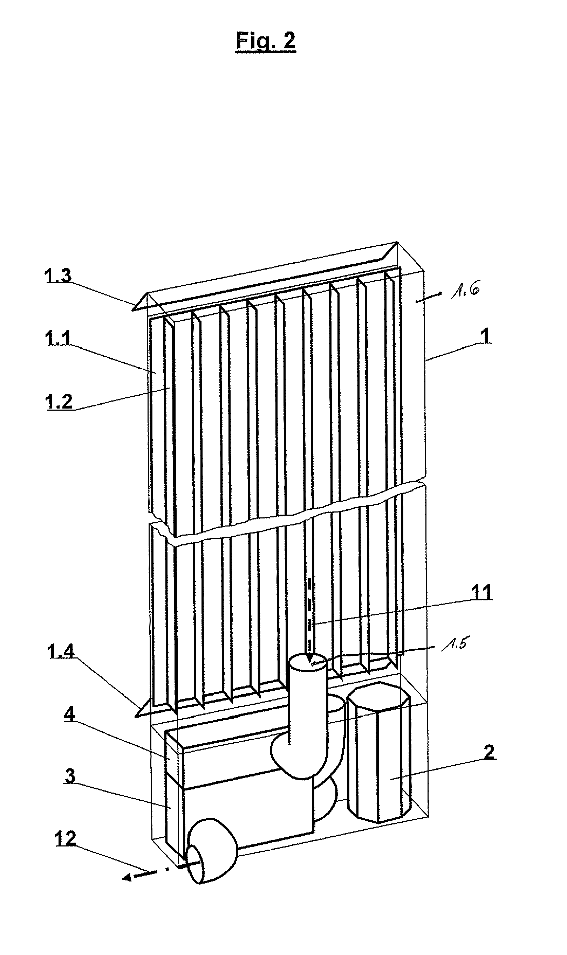

In Fig. 2 ist eine Baueinheit skizziert, welche unter anderem einen erfindungsgemäßen Hybridkollektor 1 umfasst. Die im wesentlichen rechteckige Absorberfläche 1.1 des Hybridkollektors 1 ist nahe an der vorderen, sonnenbeschienen, strahlungsdurchlässigen Gehäuseseite des Hybridkollektors 1, parallel zu dieser angeordnet. Mit der Absorberfläche wärmeleitend verbunden ist - in Fig. 2 nicht gezeigt - eine Rohrschlange, welche das Wärmeträgerfluid führt. An der hinteren Seite der Absorberfläche 1.1 stehen eine Reihe von mit ihr ebenfalls wärmeleitend verbundenen Rippenflächen 1.2 normal von ihr ab. Die Rippenflächen 1.2 stellen zusätzliche Oberflächen dar, über welche Wärmeaustausch zwischen der bestimmungsgemäß im Gehäuse 1.6 des Hybridkollektors 1 strömenden Luft und der Absorberfläche 1.1 stattfindet. Damit die Rippenflächen die solare Kaminwirkung nicht behindern und keine Wärmeflussbrücke zur hinteren Wand des Gehäuses des Hybridkollektors 1 bilden, liegen sie parallel zur Höhe des Hybridkollektors 1 und weisen zur Rückwand des Gehäuses des Hybridkollektors 1 einen Abstand auf.

In einer abgewandelten Bauform des Hybridkollektors 1 können die Rippenflächen auch an der Rückwand des Hybridkollektors 1 anliegen und dort beispielsweise sogar noch zu dieser parallel umgebogen sein, sodass sie den inneren Teil einer doppelten Rückwand bilden. Die tatsächliche Rückwand des Hybridkollektors 1 muss dann natürlich sehr gut wärmeisolierend ausgeführt sein, da die wärmeisolierend wirkende Luftschicht zwischen Rippen und Rückwand damit entfällt. Der Vorteil dieser etwas aufwändigeren Bauweise liegt darin, dass der Wärmeübergang zu der durch den Hybridkollektor 1 in erwünschter Weise durchströmenden Luft auf Grund der größeren zur Verfügung stehenden Oberfläche besser ist.

Auf Grund dieser geometrischen Gegebenheiten ist es ohne Platzverschwendung möglich, Hybridkollektor 1, Wärmepumpe 2, Gegenstromwärmetauscher 3 und Sprühbefeuchter 4, sowie die diese Teile verbindenden bzw. ihnen zwischengeschalteten Teile wie Rohre, Ventile, Gebläse, etc. in einem gemeinsamen, etwa prismatischen Gehäuse unterzubringen, wobei die zum Hybridkollektor 1 hinzukommenden Teile unter der unteren Stirnfläche des Hybridkollektors 1 angeordnet sind. Eine so gebildete Baueinheit ist beispielhaft in Fig. 2 skizziert.

Über eine Rohrleitung mit großer Querschnittsfläche wird die, aus dem Gebäude 100 von oben kommende, Abluft 11 in den Sprühbefeuchter 4 geführt. Von diesem gelangt sie in den unter dem Sprühbefeuchter angeordneten Gegenstromwärmetauscher 3 und aus diesem weiter entweder in den oberhalb angeordneten Hybridkollektor 1 oder direkt ins Freie. Neben Sprühbefeuchter 4 und darunter angeordnetem Gegenstromwärmetauscher 3 ist die Wärmepumpe 2. Neben diesen genannten Teilen finden auch die verbindenden Rohrleitungen unter diesen Teilen, sowie die weiter oben erwähnten Lüfter 6, die Ventile 8 und die Pumpe 7 für das Wärmeträgerfluid im Raum unterhalb des Hybridwärmetauschers 1 Platz.

Höhe mal Breite mal Tiefe eines typischen Hybridkollektors 1 oder einer in Fig. 2 skizzierten Baueinheit für eine erfindungsgemäße Anlage betragen beispielsweise sechs Meter mal einem Meter mal 25 cm.

Unter Mitbewertung der optischen Anmutung des Hybridkollektors 1 bzw. einer Baueinheit gemäß Fig. 2 kann es auch bei Aufstellungsorten auf mittleren Breitengraden durchaus optimal sein, einen derartigen Hybridkollektor 1 bzw. eine derartige Baueinheit vertikal auszurichten. Das ist besonders dann vorteilhaft, wenn damit mit der Außenseite einer daneben anschließenden Fassade fluchtend gebaut werden kann. Bezüglich der Energieausbeute, also des COP ist allerdings eine geneigte Anordnung besser.

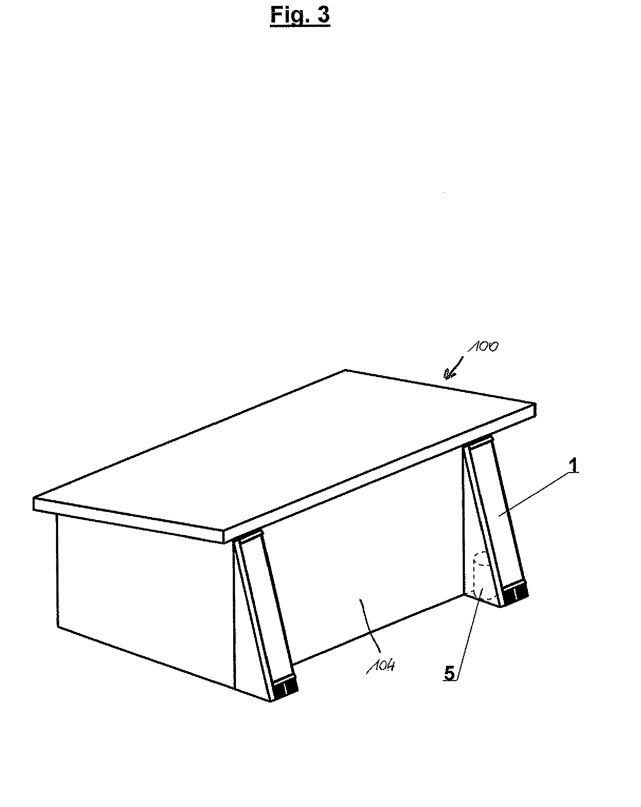

In Fig. 3 ist beispielhaft ein Gebäude 100 skizziert, an dessen Sonnenseite zwei der in Fig. 2 skizzierten erfindungsgemäß ausgeführten Baueinheiten geneigt angeordnet sind. Mit ihrem oberen Ende liegen die Baueinheiten an der vertikalen Außenfläche des Gebäudes 100 an, mit ihrem unteren Ende stehen sie etwas davon vor. Zwischen der Baueinheit und der angrenzenden Gebäudewand 104 wird somit ein sich nach oben hin zu einer Spitze verengender Raum eingeschlossen. Es ist vorteilhaft in diesem Raum weitere Teile der Anlage, wie insbesondere den Pufferspeicher 5 anzubringen und den Raum durch Wände, welche möglichst wärmeisolierend ausgeführt sein sollten, von der Außenluft abzuschließen. Diese sowie die in Fig. 2 abgebildeten Bauformen bieten den Vorteil, dass sie weitgehend industriell gefertigt und als ein Stück geliefert werden können. In Abwandlungen dieses Gedankens können in diesem Raum neben dem Pufferspeicher 5 auch weitere Teile der Anlage, wie beispielsweise die Wärmepumpe 2, untergebracht werden, womit die Anlage bei gleichen Außenabmessungen mit einer größeren Kollektorfläche ausgestattet werden kann.

In einer weiteren vorteilhaften Abwandlung der in Fig. 3 gezeigten Bauweise kann es durchaus vorteilhaft sein, nur eine einzige erfindungsgemäß wie in Fig. 2 ausgeführte Baueinheit vorzusehen und diese mit einem zweiten - womöglich von außen genau gleich ausschauenden - Hybridkollektor 1 zu kombinieren, so dass die Gesamtkollektorfläche verdoppelt wird, ohne dass die weiteren erforderlichen Geräte wie Wärmepumpe etc. zweifach ausgeführt sein müssen.

Ergänzend sei noch darauf hingewiesen, dass die sonnenzugewandte Oberfläche der Absorberfläche oder des Gehäuses des Hybridkollektors 1 mit einer photovoltaisch aktiven Schicht versehen werden kann, damit der Kollektor auch elektrische Energie liefert.

Eine weitere sich anbietende Möglichkeit, fallweise auch elektrische Energie mit Hilfe der Anlage zu gewinnen, besteht darin, die Wärmepumpe 2 als nach dem Stirlingprinzip arbeitend auszulegen. Damit kann im Umkehrbetrieb aus in der Anlage vorhandener überschüssiger thermischer Energie elektrische Energie gewonnen werden. Die dabei anfallende Abwärme des Stirlingmotors kann in der Anlage beispielsweise zum Laden des Puffers verwendet werden.

## Patentansprüche

1. Verfahren zum Klimatisieren eines Gebäudes (100), bei dem Luft durch einen Hybridkollektor (1) geführt wird, in dem ein Wärmeträgerfluid einerseits durch Solarstrahlung erwärmt werden kann und andererseits mit Luft in thermische Wechselwirkung gebracht wird, die den Hybridkollektor (1) durchströmt, wobei das erwärmte Wärmeträgerfluid zur Beheizung oder zur Warmwasserbereitung verwendet wird, **dadurch gekennzeichnet, dass** zumindest in einem ersten Betriebsmodus Abluft aus dem Gebäude (100) durch den Hybridkollektor (1) geführt wird.

2. Verfahren nach Anspruch 1, **dadurch gekennzeichnet, dass** die Abluft aus dem Gebäude (100) durch einen Gegenstromwärmetauscher (3) geführt wird, um die ebenfalls durch diesen Gegenstromwärmetauscher (3) geführte Zuluft zu temperieren, wobei die Abluft zumindest in dem ersten Betriebsmodus vor dem Eintritt in den Gegenstromwärmetauscher (3) durch einen Sprühbefeuchter (4) geführt wird.

3. Verfahren nach einem der Ansprüche 1 oder 2, **dadurch gekennzeichnet, dass** der Luftaustausch im Gebäude (100) zumindest in dem ersten Betriebsmodus ausschließlich durch natürliche Konvektion im Hybridkollektor (1) angetrieben wird.

4. Verfahren nach einem der Ansprüche 1 bis 3, **dadurch gekennzeichnet, dass** die Temperatur des Wärmeträgerfluids durch eine Wärmpumpe (2) angehoben wird, die vorzugsweise nach dem Stirlingprinzip arbeitet.

5. Verfahren nach einem der Ansprüche 1 bis 4, **dadurch gekennzeichnet, dass** in einem weiteren Betriebszustand die Durchströmung des Hybridkollektors (1) unterbrochen wird.

6. Anlage zum Klimatisieren eines Gebäudes (100) mit kontrollierter Beüftung, das einen Zuluftanschluss (101) und einen Abluftanschluss (102) aufweist, mit einem Hybridkollektor (1), der von einem Wärmeträgerfluid durchströmbar ist, das einerseits durch Solarstrahlung erwärmt werden kann und andererseits mit Umgebungsluft in thermische Wechselwirkung gebracht werden kann, welcher Hybridkollektor (1) einen unteren Luftanschluss (1.5) und einen oberen Luftanschluss (1.3) aufweist, **dadurch gekennzeichnet, dass** der untere Luftanschluss (1.5) mit dem Abluftanschluss (102) des Gebäudes (100) verbunden ist.

7. Anlage nach Anspruch 6, **dadurch gekennzeichnet, dass** stromabwärts des Abluftanschlusses (102) des Gebäudes (100) ein Gegenstromwärmetauscher (3) vorgesehen ist, der einen Ausgang (103) aufweist, der mit dem Zuluftanschluss (101) des Gebäudes (100) in Verbindung steht.

8. Anlage nach einem der Ansprüche 6 oder 7, **dadurch gekennzeichnet, dass** stromabwärts des Abluftanschlusses (102) des Gebäudes (100) ein Sprühbefeuchter (4) vorgesehen ist.

9. Anlage nach einem der Ansprüche 6 bis 8, **dadurch gekennzeichnet, dass** weiters eine Wärmpumpe (2) vorgesehen ist, die vorzugsweise nach dem Stirlingprinzip arbeitet.

10. Anlage nach einem der Ansprüche 6 bis 9, **dadurch gekennzeichnet, dass** weiters eine Klappe (9) vorgesehen ist, die die Verbindung zwischen dem unteren Luftanschluss (1.5) des Hybridkollektors (1) und dem Abluftanschluss (102) des Gebäudes (100) wahlweise unterbricht.

11. Anlage nach einem der Ansprüche 7 bis 10, **dadurch gekennzeichnet, dass** der Hybridkollektor (1) und der Gegenstromwärmetauscher (3), sowie gegebenenfalls der Sprühbefeuchter (4) als bauliche Einheit ausgeführt sind, wobei vorzugsweise der Hybridkollektor (1) oberhalb des Gegenstromwärmetauschers (3) angeordnet ist.

12. Anlage nach einem der Ansprüche 6 bis 11, **dadurch gekennzeichnet, dass** der Hybridkollektor (1) ein Gehäuse (1.6) aufweist, das vertikal ausgerichtet an einer Wand (104) des Gebäudes (100) befestigt ist und vorzugsweise mit einer weiteren Wand (104) des Gebäudes (100) seitlich bündig abschließt.

13. Anlage nach einem der Ansprüche 6 bis 12, **dadurch gekennzeichnet, dass** der Hybridkollektor (1) ein Gehäuse (1.6) aufweist, das vertikal ausgerichtet im Abstand von einer Wand (104) des Gebäudes (100) befestigt ist, und dass im Zwischenraum zwischen Gehäuse (1.6) und Wand (104) ein Pufferspeicher angeordnet ist, der vorzugsweise eine bauliche Einheit mit dem Gehäuse (1.6) bildet.

14. Anlage nach einem der Ansprüche 6 bis 13, **dadurch gekennzeichnet, dass** an der Rückseite der Absorberfläche (1.1) des Hybridkollektors (1) Rippenflächen vorgesehen sind, die sich in Einbaulage senkrecht erstrecken und die vorzugsweise einen Abstand zur Rückwand des Hybridkollektors (1) aufweisen.
